# EUROPEAN PATENT APPLICATION

(11) **EP 1 280 261 A1**
(43) Date of publication of application: **29.01.2003**
(21) Application number: 01919904.1
(22) Date of filing: 12.04.2001
(51) Int. Cl.: H02K 23/54

(54) **FLAT TYPE VIBRATING MOTOR**

(30) Priority: 12.04.2000 JP 2000111338
(71) Applicant: Subaru Co., Ltd., Kawasaki-shi, Kanagawa 214-0014 (JP)
(72) Inventor: HAMADA, Koichi, SUBARU CO., LTD., Kawasaki-shi, Kanagawa 214-0014 (JP)
(74) Representative: Felder, Peter
(86) International application number: JP0103151
(87) International publication number: WO01078217

(57) **Abstract**

A flat type vibrating motor capable of providing a large vibration while achieving a reduction in size and eliminating a starting dead center. A ring-shaped stator (4) divided into eight parts in a circumferential direction and magnetized alternately to an N-pole and an S-pole and a rotatable generally sector-shaped rotor (5) opposed and face-to-face to the stator (4) are disposed in a casing (3). Three armature coils (11a, 11b, 11c) each of 60° in a coil winding angle are disposed in the rotor (5), the first and second coils being arranged at an arrangement pitch of 150° and the second and third coils being arranged at an arrangement angle of 60°. A non-magnetic weight member (21) is disposed between the armature coils (11a, 11b), and a commutator board (14) having twelve commutators (10) arranged in juxtaposition with each other thereon in a circumferential direction is fixed on the rotor. A pair of brushes (12) are formed so as to be brought into contact with the commutators (10) at an electrical angle of 135°.

## Description

### Technical Field

The present invention relates to a small-sized flat type vibrating motor which is used for notifying a user of a call alert in the form of a vibration mode in a mobile phone, a radio pager or the like.

### Background Art

A conventionally known flat type vibrating motor of the above type is a flat coreless vibrating motor disclosed in, for example, Japanese Patent Application Laid-Open Publication No. 6-205565. The flat coreless vibrating motor comprises a magnet fixed at the bottom of a casing, a substantially sectorial rotatable rotor disposed opposite and face-to-face to the magnet, and a shaft disposed at the pivot of the rotor. The flat coreless vibrating motor is designed such that three armature coils are arranged at the rotor in a substantially sectorial manner and are molded integrally with each other with a resin material, and a centrifugal force acts during rotation of the rotor so as to generate a vibration since the rotor per se is deviated.

In the above-described flat type vibrating motor, the weight of its coils is deviated to one side of the rotor in the case where this motor has a great outer diameter, so that the coils can serve as a weight so as to generate a vibration during the rotation of the rotor. However, as equipment is reduced in size, the outer diameter of the flat type vibrating motor must be reduced. As the outer diameter of the flat type vibrating motor becomes smaller, the coil also is reduced in size, and further, the coil is reduced in weight. As a consequence, even if the rotor is rotated, a sufficient vibration cannot be generated.

Moreover, the generated vibration is required to be greater in inverse proportion to the reduced outer diameter of the motor under the current circumstances. That is, the development of a flat type vibrating motor capable of generating a greater vibration despite it having a smaller size has been desired.

The present invention has been accomplished in an attempt to solve the above-described problem. An object of the present invention is thus to provide a flat type vibrating motor which can generate a greater vibration and has no starting dead center while also achieving miniaturization.

### Disclosure of the Invention

In order to solve the above-described problem, a flat type vibrating motor according to the present invention comprises: a flat and cylindrical casing; a ring-shaped stator housed in the casing, the stator being divided into eight equal parts in a circumferential direction and alternately magnetized to an N-pole and an S-pole; a rotor disposed opposite and face-to-face to the stator and rotatably supported in the casing; the rotor being provided with first, second and third armature coils, each of which is formed to have a coil winding angle of 60°, wherein the first armature coil and the second armature coil are arranged at an arrangement pitch of 150°, a non-magnetic weight member is interposed between the first armature coil and the second armature coil, and the second armature coil and the third armature coil are arranged at an arrangement pitch of 60°; the rotor being provided with a commutator board having first to twelfth commutators juxtaposed in a circumferential direction, wherein the first, fourth, seventh and tenth commutators are short-circuited via a first conductor, the second, fifth, eighth and eleventh commutators are short-circuited via a third conductor and the third, sixth, ninth and twelfth commutators are short-circuited via a second conductor, respectively, a leading end of the first armature coil is connected to the first conductor, a leading end of the second armature coil is connected to the second conductor, and a leading end of the third armature coil is connected to the third conductor, and terminating ends of the first, second and third armature coils are short-circuited; and a pair of brushes formed in such a manner as to be brought into contact with the commutators at an electrical angle of 135°, to supply electric power to the armature coils. Herein, the coil winding angle designates an angular range occupied by the armature coil in the circumferential direction. For example, in the case of a sectorial armature coil, the coil winding angle is represented as a center angle; or in the case of an elliptic armature coil, the coil winding angle is represented as an angle formed by two radial tangents which touch the outer edge of the coil.

In a preferred embodiment according to the present invention, the rotor may be formed to have a substantially sectorial shape or a circular shape. Furthermore, the commutator board may be formed to have a substantially sectorial shape, and each of the first to third armature coils may be formed to have a flat and substantially sectorial shape having a center angle of 60°. Alternatively, the commutator board may be formed to have a circular shape, and each of the first to third armature coils may be formed to have an elliptic shape.

### Brief Description of the Drawings

Fig. 1 is an exploded perspective view showing an embodiment of a flat type vibrating motor according to the present invention;
Fig. 2 is an elevational cross-sectional view showing essential parts of the flat type vibrating motor;
Fig. 3 is a plan view showing brushes;
Figs. 4A and 4B are a plan view and a bottom view showing a rotor, respectively, and Fig. 4C is a cross-sectional view taken along a line 4C-4C of Fig. 4A;
Figs. 5A and 5B are a plan view and a bottom view showing a commutator board, respectively;
Fig. 6A is a connection diagram illustrating the rotor, and Fig. 6B is a developed schematic view showing the motor, to explain the relative positions of the rotor, commutators, a stator and contact points of brushes;
Figs. 7A to 7D are views illustrating the operation mode of the motor, to explain the rotation principle of the motor when the rotor is located at 0° to 45°;
Figs. 8A to 8D are views illustrating the operation mode of the motor, to explain the rotation principle of the motor when the rotor is located at 60° to 105°;
Figs. 9A to 9D are views illustrating the operation mode of the motor, to explain the rotation principle of the motor when the rotor is located at 120° to 165°; and
Fig. 10 is a plan view showing a commutator board in another embodiment of a flat type vibrating motor according to the present invention.

### Best Mode for Carrying Out the Invention

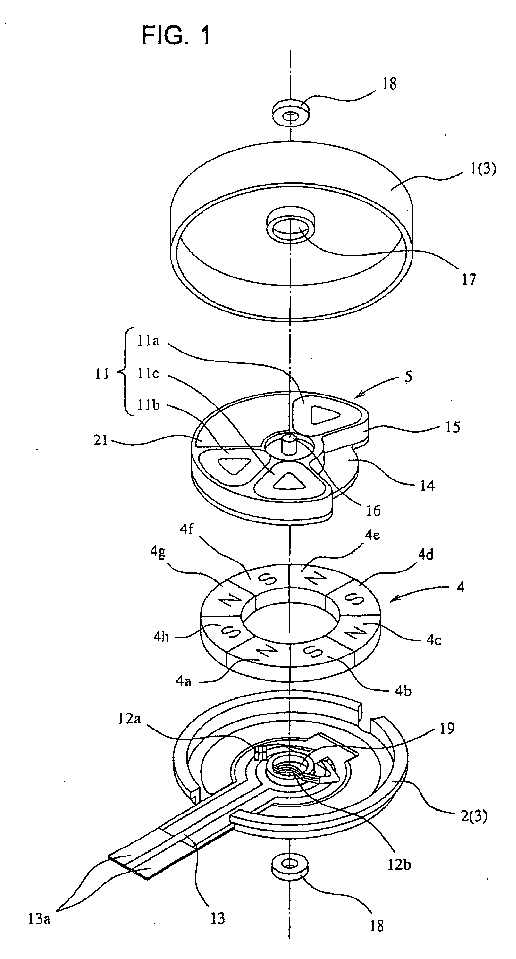

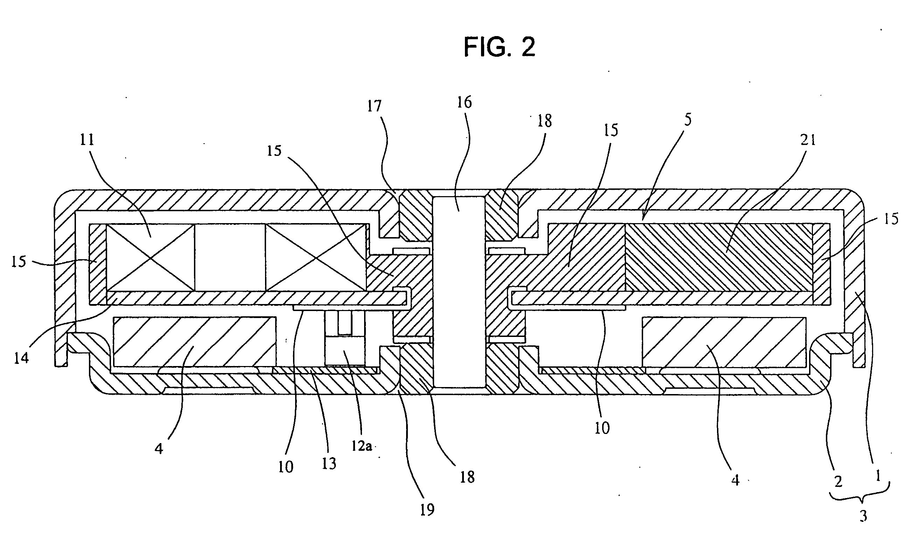

Figs. 1 and 2 are an exploded perspective view showing a flat type vibrating motor (hereinafter referred to as a motor) and an elevational cross-sectional view showing essential parts of this motor, respectively, in an embodiment according to the present invention. In this motor, a ring-shaped stator 4 and a substantially sectorial rotor 5 are housed inside of a casing 3 consisting of a case 1, which is formed to have a small-sized flat cylindrical shape and has a closed upper end and a diameter of, for example, 12 mm, and a disk-shaped bracket 2 fitted in an opening formed at the lower end of the case 1.

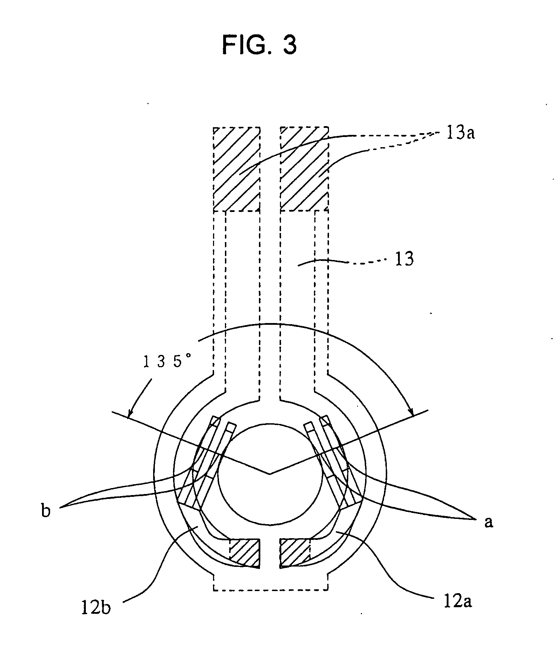

In the bracket 2 are provided the ring-shaped stator 4 and a pair of brushes 12a and 12b, which are brought into contact with commutators 10, described later, disposed at the lower surface of the rotor 5 so as to supply a current to armature coils 11. These brushes 12a and 12b are soldered onto a brush base 13, which is formed in such a manner as to be connected to a power source through lead wires (not shown) soldered to ends 13a and 13a thereof. The brush 12a of a positive electrode and the brush 12b of a negative electrode are formed in such a manner as to be brought into contact, at contact points a and b thereof, with the commutators 10 at an electrical angle of 135°, respectively, as shown in Fig. 3.

Here, the stator 4 is divided into eight equal parts in a circumferential direction, and thus, is constituted of eight stator segments 4a to 4h, each of which is formed to have a sectorial shape having a center angle of 45°. The stator segments 4a to 4h are alternately magnetized to an N-pole and an S-pole, and further, are secured onto the bracket 2 via appropriate means such as an adhesive in such a manner that the boundaries between the adjacent magnetic poles accord with the contact points on the pair of brushes 12a and 12b at which the two brushes 12a and 12b are brought into contact with the commutators 10.

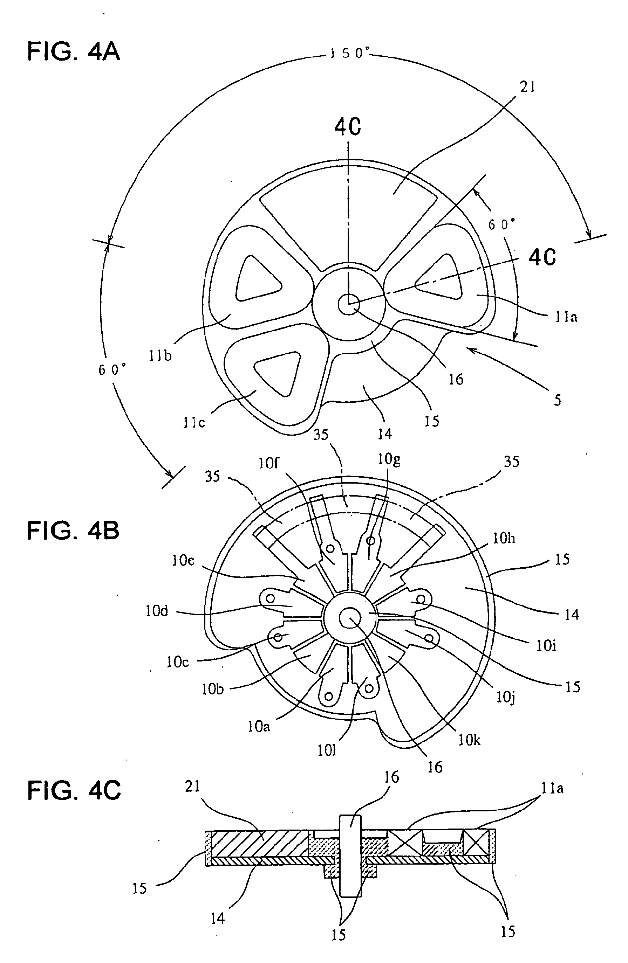

As shown in Figs. 4A to 4C, the rotor 5 is configured such that first, second and third flat armature coils 11a, 11b and 11c each formed to have a substantially sectorial shape having a center angle of 60° around a rotary shaft 16 disposed at a pivot of the rotor 5, a flat weight member 21, which is interposed between the first armature coil 11a and the second armature coil 11b and is formed of a non-magnetic metal to have a substantially sectorial shape, and the rotary shaft 16 are integrally fixed onto a plate-shaped commutator board 14 having a substantially sectorial shape by means of a resin 15. As shown in Figs. 1 and 2, the commutator board 14 faces a face of the stator 4 and the rotary shaft 16 is rotatably supported on the casing 3 via a bearing metal 18 fitted in an opening 17 formed at the center of the case 1 and another bearing metal 18 fitted in an opening 19 formed at the center of the bracket 2.

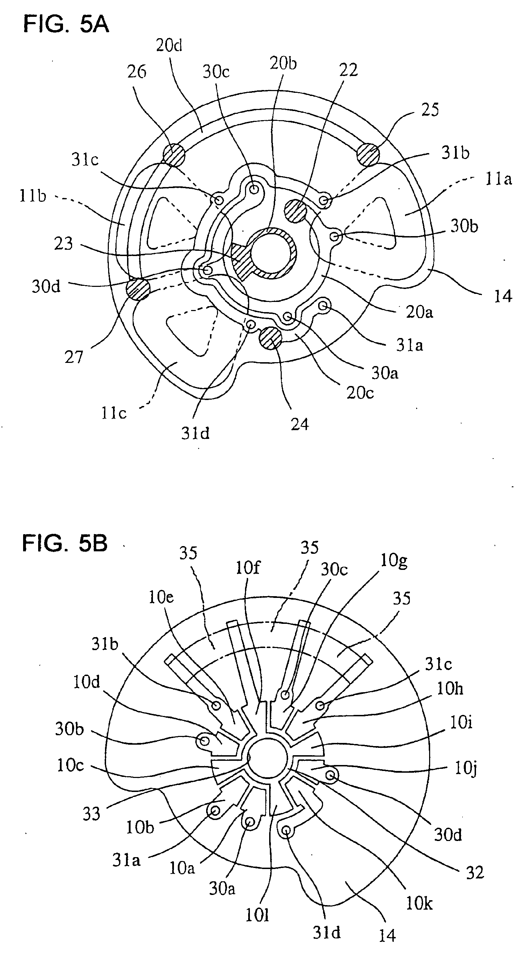

Figs. 5A and 5B are a plan view and a bottom view showing the commutator board 14, respectively, before the first armature coil 11a, the second armature coil 11b, the third armature coil 11c and the weight member 21 are secured by means of the resin 15. On the front surface of the commutator board 14 are formed printed wirings 20a, 20b and 20c serving as first to third conductors for soldering thereto the leading ends of the first armature coil 11a, the second armature coil 11b and the third armature coil 11c, respectively. The leading end 11a₁ of the first armature coil 11a is soldered to a soldering portion 22 of the printed wiring 20a serving as the first conductor; the leading end 11b₁ of the second armature coil 11b is soldered to a soldering portion 23 of the printed wiring 20b serving as the second conductor; and the leading end 11c₁ of the third armature coil 11c is soldered to a soldering portion 24 of the printed wiring 20c serving as the third conductor. Furthermore, the terminating ends 11a₂, 11b₂ and 11c₂ of the first armature coil 11a, the second armature coil 11b and the third armature coil 11c are soldered to respective soldering portions 25, 26 and 27 of a printed wiring 20d serving as a fourth conductor, so as to be short-circuited.

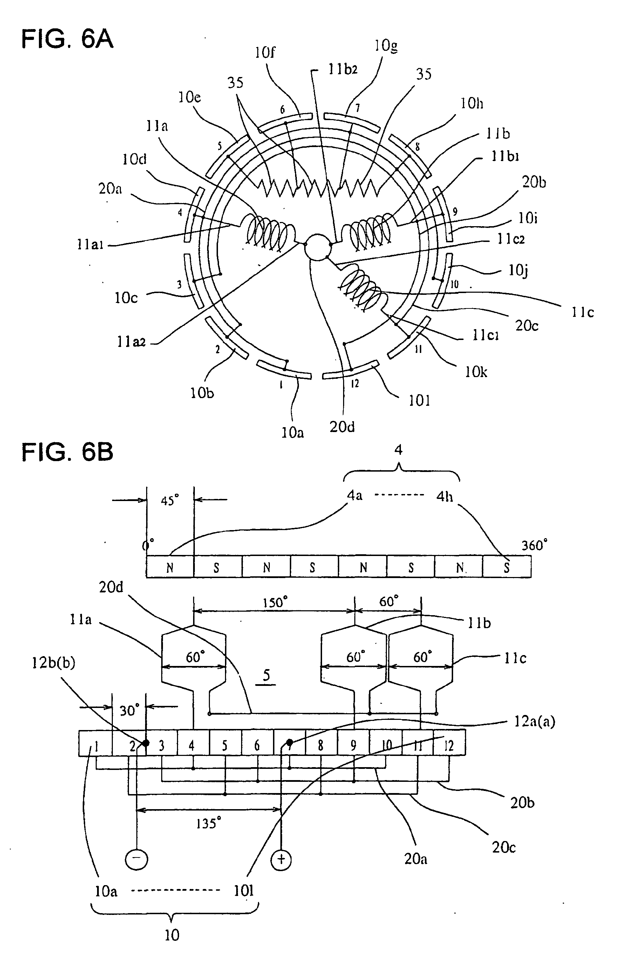

Moreover, as shown in Fig. 5B, on the rear surface of the commutator board 14 are radially arranged first to twelfth commutators 10a to 101. The first, fourth, seventh and tenth commutators 10a, 10d, 10g and 10j are short-circuited to the printed wiring 20a via through holes 30a to 30d, respectively; the second, fifth, eighth and eleventh commutators 10b, 10e, 10h and 10k are short-circuited to the printed wiring 20c via through holes 31a to 31d, respectively; and the third, sixth, ninth and twelfth commutators 10c, 10f, 10i and 101 are short-circuited to a ring-shaped printed wiring 32, and further, are short-circuited to the printed wiring 20b via a through hole 33. The commutators 10a to 101, the armature coils 11a, 11b and 11c, and the first to fourth conductors, i.e., the printed wirings 20a to 20d, are connected, as illustrated in the connection diagram of Fig. 6A.

Incidentally, in Figs. 5B and 6A, reference numeral 35 designates a resistor for preventing electric noise. Additionally, Fig. 6B is a developed view showing the relative positions of the rotor 5, the commutators 10a to 101, the stator segments 4a to 4h and the contact points a and b of the brushes 12a and 12b.

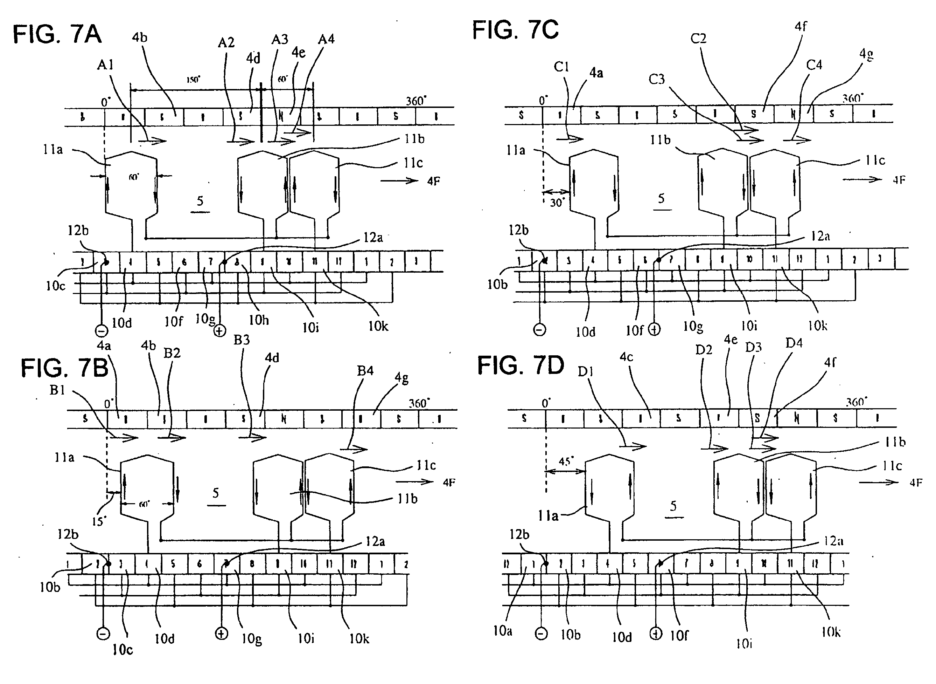

Subsequently, an explanation will be given of the operation mode of the above-described flat type vibrating motor and the absence of a starting dead center by reference to Figs. 7A to 9D.

While a voltage is applied to the coils via the brushes, a force acts on the coils in a predetermined direction in accordance with Fleming's rule due to the effect of the direction of a current flowing in the coil and the magnetic field of the stator, so that the rotor is rotated by the force serving as a rotating force. Since no current flows in the coils unless the voltage is applied, the rotation of the rotor is stopped without the force due to the magnetic field of the stator being applied to the coils. Incidentally, the stop position is not specified.

Fig. 7A illustrates the position when the rotor 5 is located at 0°. The current flows in the brush 12a, the commutator 10g, the commutator 10d, the armature coil 11a, the armature coil 11b, the commutator 10i, the commutator 10c and the brush 12b in sequence, as indicated by arrows, and also, in the brush 12a, the commutator 10h, the commutator 10k, the armature coil 11c, the armature coil 11b, the commutator 10i, the commutator 10c and the brush 12b in sequence, as indicated by other arrows. Consequently, in accordance with Fleming's left-hand rule, a rotating force is generated between the stator segment 4b and the armature coil 11a, as indicated by an arrow A1; a rotating force is generated between the stator segment 4d and the armature coil 11b, as indicated by an arrow A2; a rotating force is generated between the stator segment 4e and the armature coil 11b, as indicated by an arrow A3; and a rotating force is generated between the stator segment 4e and the armature coil 11c, as indicated by an arrow A4, so that a resultant rotating force 4F is generated to thereby start the rotor 5.

Furthermore, Fig. 7B illustrates the position when the rotor 5 is located at 15°. The current flows in the brush 12a, the commutator 10g, the commutator 10d, the armature coil 11a, the armature coil 11b, the commutator 10i, the commutator 10c and the brush 12b in sequence, as indicated by arrows, and also, in the armature coil 11c, the commutator 10k, the commutator 10b and the brush 12b in sequence, as indicated by other arrows. Consequently, rotating forces are generated between the stator segments 4a and 4b and the armature coil 11a, as indicated by arrows B1 and B2; a rotating force is generated between the stator segment 4d and the armature coil 11b, as indicated by an arrow B3; and a rotating force is generated between the stator segment 4g and the armature coil 11c, as indicated by an arrow B4, so that a resultant rotating force 4F is generated to thereby start the rotor 5.

Moreover, Fig. 7C illustrates the position when the rotor 5 is located at 30°. The current flows in the brush 12a, the commutator 10g, the commutator 10d, the armature coil 11a, the armature coil 11c, the commutator 10k, the commutator 10b and the brush 12b in sequence, as indicated by arrows, and also, in the brush 12a, the commutator 10f, the commutator 10i, the armature coil 11b, the armature coil 11c, the commutator 10k, the commutator 10b and the brush 12b in sequence, as indicated by other arrows. Consequently, a rotating force is generated between the stator segment 4a and the armature coil 11a, as indicated by an arrow C1; rotating forces are generated between the stator segment 4f and the armature coils 11b and 11c, as indicated by arrows C2 and C3; and a rotating force is generated between the stator segment 4g and the armature coil 11c, as indicated by an arrow C4, so that a resultant rotating force 4F is generated to thereby start the rotor 5.

Additionally, Fig. 7D illustrates the position when the rotor 5 is located at 45°. The current flows in the brush 12a, the commutator 10f, the commutator 10i, the armature coil 11b, the armature coil 11a, the commutator 10d, the commutator-10a and the brush 12b in sequence, as indicated by arrows, and also, in the armature coil 11b, the armature coil 11c, the commutator 10k, the commutator 10b and the brush 12b in sequence, as indicated by other arrows. Consequently, in accordance with Fleming's left-hand rule, a rotating force is generated between the stator segment 4c and the armature coil 11a, as indicated by an arrow D1; a rotating force is generated between the stator segment 4e and the armature coil 11b, as indicated by an arrow D2; and rotating forces are generated between the stator segment 4f and the armature coils 11b and 11c, as indicated by arrows D3 and D4, so that a resultant rotating force 4F is generated to thereby start the rotor 5.

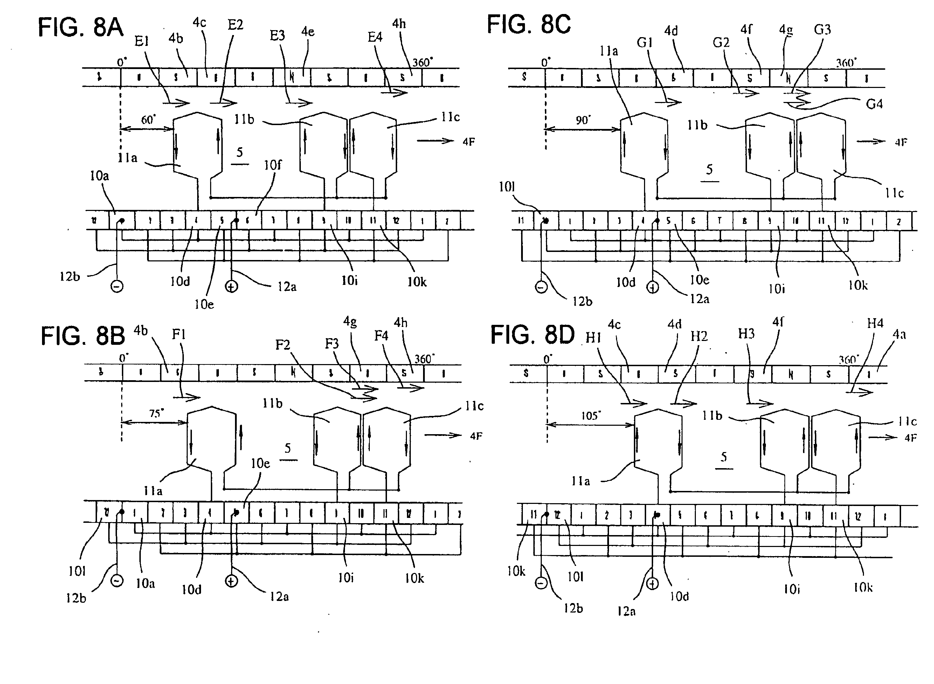

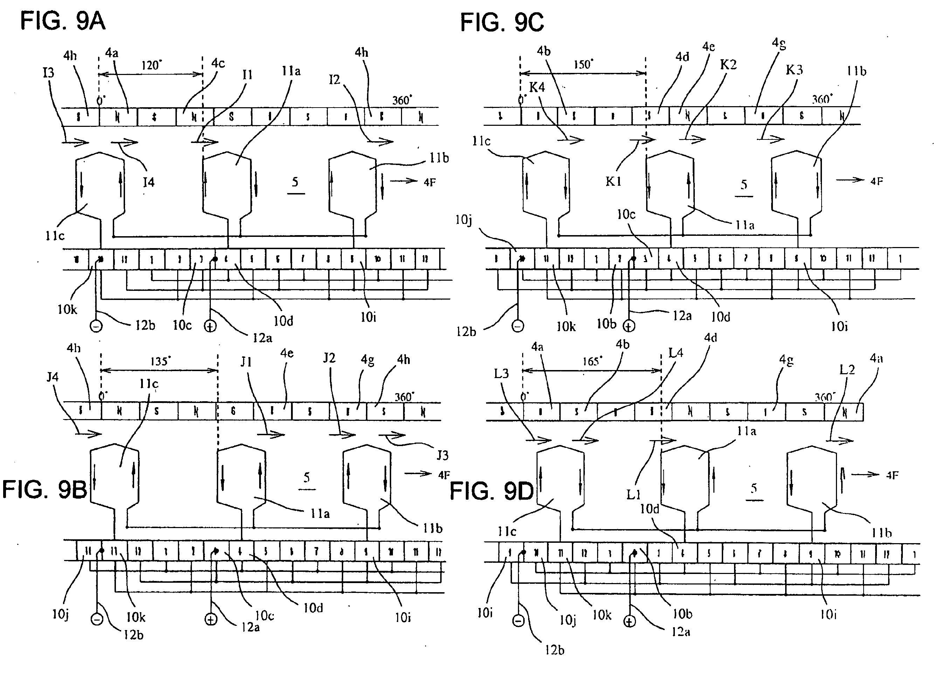

Similarly, in the case where the rotor 5 is located at 60°, 75°, 90° and 105°, as illustrated in Figs. 8A to 8D, respectively, and further, where the rotor 5 is located at 120°, 135°, 150° and 165°, respectively, as illustrated in Figs. 9A to 9D, the rotor 5 can be started in the same manner as described above. Although not illustrated, in the case where the rotor 5 is located at any angle ranging from 165° to 360°, the rotor 5 can be started in the same manner as described above.

As described above, since the brushes 12a and 12b are brought into contact with the commutators 10 no matter which position the rotor 5 is stopped at, the current supplied via the brushes flows in the armature coils 11a, 11b and 11c in such a manner that the forces acting in the same direction are generated in the armature coils 11a, 11b and 11c all the time to produce a predetermined torque (4F) due to the magnetic field of the stator, thus providing a motor without any starting dead center unless the stop position of the rotor is restricted to a predetermined position.

Figs. 7A to 7D, 8A to 8D and 9A to 9D illustrate that the rotor can be started no matter which position the rotor is located at, and further, that the rotor is continuously rotated in the same direction. While the voltage is supplied to the brushes, the current flows in the armature coils 11a, 11b and 11c in such a manner that the predetermined torque (4F) is generated all the time with respect to the stator 4 in the given direction, thereby maintaining the rotation of the rotor.

As to the three armature coils 11a, 11b and 11c having a center angle of 60°, the armature coils 11a and 11b are arranged at an arrangement pitch, i.e., an arrangement angle of 150°; the armature coils 11b and 11c are arranged at an arrangement angle of 60°; each of the leading ends of the armature coils 11a, 11b and 11c is connected to a corresponding one of the conductors 20a, 20b and 20c; the commutators 10a, 10d, 10g and 10j are short-circuited to the conductor 20a; the commutators 10b, 10e, 10h and 10k are short-circuited to the conductor 20c; the commutators 10c, 10f, 10i and 101 are short-circuited to the conductor 20b; the terminating ends of the armature coils 11a, 11b and 11c are short-circuited to the conductor 20d; and the electric brushes 12a and 12b are arranged at an open angle (i.e., an electrical angle) of 135°. Consequently, the contact points a and b of the electric brushes 12a and 12b are brought into contact with the commutator 10 all the time, and further, the current can flow in such a manner that the forces act on the armature coils 11 all the time in the same direction to produce the predetermined torque due to the magnetic field of the stator 4. Therefore, it is unnecessary to provide a mechanism for previously determining the stop position of the rotor 5, and it is possible to securely start the rotor 5 in the given direction and rotate the rotor 5 by a large rotating force no matter which position the rotor 5 is located at.

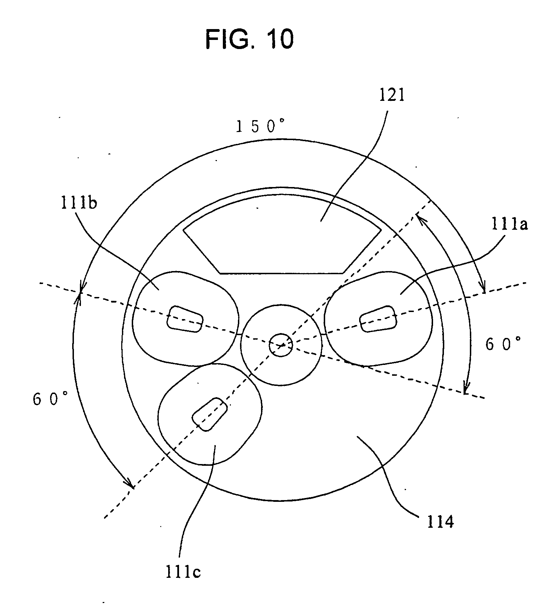

Incidentally, although the armature coils 11a, 11b and 11c arranged on the commutator board 14 are each formed to have a substantially sectorial shape in the motor in the above-described embodiment, armature coils 111a, 111b and 111c may each be formed to have a substantially elliptical shape, as shown in Fig. 10. In this case, a commutator board 114 may be formed to have a disk-like shape. In Fig. 10, reference numeral 121 designates a weight member.

According to the present invention, even if the rotor is stopped by stopping the supply of the voltage to the motor, the electric brushes are brought into contact with the commutator all the time, and further, the current can flow in such a manner that forces act on the armature coils all the time in the given direction to produce the predetermined torque due to the magnetic field of the stator. Therefore, it is possible to securely start the rotor in the given direction and rotate the rotor by a large rotating force without restricting the stop position of the rotor.

In addition, there are three coils and the weight member is disposed in the rotor, thereby producing a large torque, and at the same time, the combination of the weight of the weight member and the weight of the coils can increase the deviation of the center of gravity. Thus, a motor capable of generating a large vibration in spite of its small size can be provided.

## Claims

1. A flat type vibrating motor comprising:
a flat and cylindrical casing;
a ring-shaped stator housed in said casing, said stator being divided into eight equal parts in a circumferential direction and alternately magnetized to an N-pole and an S-pole;
a rotor disposed opposite and face-to-face to said stator and rotatably supported in said casing;
said rotor being provided with first, second and third armature coils, each of which is formed to have a coil winding angle of 60°, wherein said first armature coil and said second armature coil are arranged at an arrangement pitch of 150°, a non-magnetic weight member is interposed between said first armature coil and said second armature coil, and said second armature coil and said third armature coil are arranged at an arrangement pitch of 60°;
said rotor being provided with a commutator board having first to twelfth commutators juxtaposed in a circumferential direction, wherein said first, fourth, seventh and tenth commutators are short-circuited via a first conductor, said second, fifth, eighth and eleventh commutators are short-circuited via a third conductor and said third, sixth, ninth and twelfth commutators are short-circuited via a second conductor, respectively, a leading end of said first armature coil is connected to said first conductor, a leading end of said second armature coil is connected to said second conductor, and a leading end of said third armature coil is connected to said third conductor, and terminating ends of said first, second and third armature coils are short-circuited; and
a pair of brushes formed in such a manner as to be brought into contact with said commutators at an electrical angle of 135°, to supply electric power to said armature coils.

2. A flat type vibrating motor according to claim 1, wherein said rotor is formed to have a substantially sectorial shape.

3. A flat type vibrating motor according to claim 1, wherein said rotor is formed to have a circular shape.

4. A flat type vibrating motor according to claim 2, wherein said commutator board is formed to have a substantially sectorial shape, and each of said first to third armature coils is formed to have a flat and substantially sectorial shape having a center angle of 60°.

5. A flat type vibrating motor according to claim 3, wherein said commutator board is formed have a circular shape, and each of said first to third armature coils is formed to have an elliptic shape.
